# EUROPEAN PATENT APPLICATION

(11) **EP 4 836 152 A1**
(43) Date of publication of application: **04.11.2026**
(21) Application number: 24922826.3
(22) Date of filing: 06.02.2024
(51) Int. Cl.: H01M 50/342

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: SU, Huasheng, Ningde, Fujian 352100 (CN); ZHENG, Yulian, Ningde, Fujian 352100 (CN); HUANG, Shoujun, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/076460
(87) International publication number: WO 2025/166583

(57) **Abstract**

A battery cell (10), a battery (100), and an electrical device. The battery cell (10) comprises a housing (1) and an electrode assembly (2). The housing (1) is cylindrical, the housing (1) accommodates the electrode assembly (2), and the housing (1) comprises a side wall (13) disposed surrounding the electrode assembly (2). The side wall (13) is provided with a groove group (131), the groove group (131) comprising multiple grooves arranged at intervals along a circumferential direction of the side wall (13), the multiple grooves comprising at least one first groove (132), and the side wall (13) being configured to be capable of cracking along at least a portion of the first groove (132) when the battery cell (10) releases pressure. The multiple grooves further comprise at least one second groove (133), the minimum residual thickness of the second groove (133) being greater than the minimum residual thickness of the first groove (132). Disposing the second groove (133) on the side wall (13) enables the side wall (13) to release stress at the position where the second groove (133) is disposed, thereby alleviating deformation of the side wall (13) caused by stress release of the side wall at the first groove (132), effectively increasing the roundness of the side wall (13), and increasing assembly quality of the battery cell (10), thereby prolonging the service life of the battery cell (10).

## Description

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. With vigorous promotion of new energy vehicles, the demand for power battery products is increasingly growing. As the demand for batteries increases, higher requirements are placed on the reliability of battery cells.

In battery technology, not only does the reliability of the battery cell need to be considered, but also the service life of the battery cell needs to be considered. Therefore, how to improve the service life of the battery cells is an urgent problem to be solved in the battery technology.

### SUMMARY

Embodiments of the present application provide a battery cell, a battery, and an electric device, which can effectively improve the service life of the battery cell.

In a first aspect, the embodiments of the present application provide a battery cell. The battery cell includes a housing and an electrode assembly. The housing has a cylindrical shape. The housing accommodates the electrode assembly, and the housing includes a side wall disposed around the electrode assembly. The side wall is provided with a groove group, the groove group includes a plurality of grooves spaced apart from each other along a circumferential direction of the side wall, the plurality of grooves include at least one first groove, and the side wall is configured to be capable of cracking along at least a portion of the first groove when the battery cell is subjected to pressure relief. The plurality of grooves further include at least one second groove, and a minimum residual thickness of the second groove is greater than a minimum residual thickness of the first groove.

In the above technical solution, the side wall of the housing is provided with a groove group, and the plurality of grooves of the groove group include a first groove, such that the side wall can crack along at least a portion of the first groove when the battery cell is subjected to pressure relief, thereby relieving the internal pressure of the battery cell and enabling the side wall of the housing to have a pressure relief function. The plurality of grooves of the groove group further include a second groove, and the minimum residual thickness of the second groove is less than the minimum residual thickness of the first groove, such that the side wall is prone to cracking along the first groove and is not prone to cracking along the second groove when the battery cell is subjected to pressure relief. The arrangement of the second groove on the side wall enables the side wall to release stress at the position where the second groove is formed, thereby alleviating deformation of the side wall caused by stress release of the side wall at the first groove. This can effectively improve the roundness of the side wall and improve the assembly quality of the battery cell, thereby prolonging the service life of the battery cell.

In some embodiments, along the circumferential direction of the side wall, the first grooves and the second grooves are alternately arranged. Each second groove can alleviate deformation of the side wall caused by the stress released from the two adjacent first grooves located on both sides of the second groove, thereby further improving the roundness of the side wall.

In some embodiments, a plurality of first grooves and a plurality of second grooves are provided in the groove group. A plurality of first grooves are provided in the groove group, which can improve the pressure relief capability of the side wall, such that the side wall can crack along the plurality of first grooves when thermal runaway occurs in the battery cell, thereby relieving the pressure inside the battery cell from a plurality of positions of the side wall. A plurality of second grooves are provided in the groove group, and the side wall can release stress at positions where the plurality of second grooves are provided, thereby further reducing the degree of deformation of the side wall caused by the first groove, and further improving the roundness of the side wall.

In some embodiments, a sum of a number of the first grooves and a number of the second grooves in the groove group is N, where 2 ≤ N ≤ 20. In this way, the sum of the number of the first grooves and the number of the second grooves in the groove group falls within a reasonable range, thereby reducing the risk of insufficient strength of the side wall caused by an excessively large sum of the number of the first grooves and the number of the second grooves.

In some embodiments, 6 ≤ N ≤ 15. When N ≥ 6, a sufficient number of grooves are provided on the side wall, which is conducive to improving the roundness of the side wall; when N ≤ 15, the total number of the first grooves and the second grooves is further reduced, thereby further increasing the strength of the side wall.

In some embodiments, a number of the first grooves is equal to a number of the second grooves in the groove group. In this way, half of the plurality of grooves in the groove group are the first grooves, and the other half are the second grooves. This can ensure both the pressure relief capability of the side wall and the roundness of the side wall.

In some embodiments, along the circumferential direction of the side wall, the plurality of grooves in the groove group are uniformly distributed on the side wall. This makes the force more uniform during the formation of the grooves on the side wall, thereby further improving the roundness of the side wall.

In some embodiments, the side wall is provided with a plurality of groove groups, and the plurality of groove groups are spaced apart from each other along an axial direction of the side wall. This structure enables the emissions inside the housing to be discharged from the regions of the first grooves in the plurality of groove groups when thermal runaway occurs in the battery cell, thereby increasing the pressure relief rate of the battery cell.

In some embodiments, the first groove is provided with a first-to-open segment that preferentially cracks, the first groove includes a first groove segment, a second groove segment, and a third groove segment, the second groove segment connects the first groove segment and the third groove segment, and at least a portion of the second groove segment forms the first-to-open segment. When thermal runaway occurs in the battery cell, the side wall preferentially cracks at the position of the first-to-open segment of the second groove segment, and the resulting crack can propagate along the first groove segment and the third groove segment. After the side wall cracks at the position of the first-to-open segment, the side wall can quickly crack along the first groove segment and the third groove segment, thereby shortening the duration for the side wall to crack along the first groove. This allows for timely pressure relief and reduces the risk of fire or explosion during thermal runaway of the battery cell, thereby effectively improving the reliability of the battery cell.

In some embodiments, the first groove segment, the second groove segment, and the third groove segment are sequentially connected to form the continuously arranged first groove, and on an extension path of the first groove, a midpoint of the first groove is located in the first-to-open segment. In this way, the first-to-open segment is located in the middle region of the first groove, which can shorten the difference between the crack paths extending from the first-to-open segment toward two ends of the first groove after the side wall cracks at the position of the first-to-open segment. This is conducive to the synchronous cracking of the side wall along the first groove segment and the third groove segment, thereby further shortening the duration for the side wall to crack along the first groove, and improving the timeliness of pressure relief of the battery cell.

In some embodiments, on an extension path of the second groove segment, a midpoint of the second groove segment is located in the first-to-open segment. This can shorten the difference between the crack paths extending from the first-to-open segment toward two ends of the second groove segment after the side wall cracks at the position of the first-to-open segment. Thus, when thermal runaway occurs in the battery cell, the side wall can quickly crack along the second groove segment, thereby enabling the side wall to quickly crack along the first groove segment and the third groove segment, and effectively shortening the duration for the side wall to crack along the first groove.

In some embodiments, a minimum residual thickness of the first-to-open segment is T₁, a minimum residual thickness of other regions of the first groove is T₂, and the minimum residual thickness of the second groove is T₃, where T₁ < T₂ and T₁ < T₃. In this way, the strength of the residual portion in the other regions of the first groove and the strength of the residual portion of the second groove are both greater than the strength of the residual portion of the first-to-open segment. Therefore, the side wall can preferentially crack at the first-to-open segment when thermal runaway occurs in the battery cell, such that when thermal runaway occurs in the battery cell, the side wall can crack along the first groove, but the side wall is less likely to crack along the second groove.

In some embodiments, |T₃ - T₂| ≤ 0.1 mm. In this way, the difference between the groove depth of the second groove and the groove depth of the other regions of the first groove is not excessively large. This helps reduce the difference in the amount of material displaced during machining of the first groove and the second groove and reduce the degree of deformation of the side wall, thereby helping improve the roundness of the side wall.

In some embodiments, a minimum residual thickness of the first-to-open segment is T₁, and a wall thickness of the side wall is D, where 0.04 ≤ T₁/D ≤ 0.9. When T₁/D ≥ 0.04, the proportion of the minimum residual thickness of the first-to-open segment in the wall thickness of the side wall is not excessively small, such that the residual portion of the first-to-open segment has sufficient strength, thereby reducing the risk of the side wall cracking prematurely along the first-to-open segment during long-term cycling of the battery cell and prolonging the service life of the battery cell. When T₁/D ≤ 0.9, the proportion of the minimum residual thickness of the first-to-open segment in the wall thickness of the side wall is not excessively large, such that the side wall can crack at the first-to-open segment in a more timely manner when thermal runaway occurs in the battery cell, thereby shortening the duration for the side wall to crack along the first groove and reducing the risk of fire or explosion of the battery cell.

In some embodiments, 0.1 ≤ T₁/D ≤ 0.5. When T₁/D ≥ 0.1, the proportion of the minimum residual thickness of the first-to-open segment in the wall thickness of the side wall is further increased, thereby further reducing the risk of the side wall cracking prematurely along the first-to-open segment during long-term cycling of the battery cell. When T₁/D ≤ 0.5, the proportion of the minimum residual thickness of the first-to-open segment in the wall thickness of the side wall is further decreased, thereby further reducing the risk of fire or explosion of the battery cell.

In some embodiments, on an extension path of the second groove segment, a groove length of the first-to-open segment is L, where 0.2 mm ≤ L ≤ 10 mm. When L ≥ 0.2 mm, the groove length of the first-to-open segment is not excessively small, which can reduce the machining difficulty of the first-to-open segment; when L ≤ 10 mm, the groove length of the first-to-open segment is not excessively large, which can achieve precise control over the initiation position of the side wall and improve the accuracy of the initiation position.

In some embodiments, 1 mm ≤ L ≤ 6 mm. When L ≥ 1 mm, the groove length of the first-to-open segment is further increased, thereby further reducing the machining difficulty of the first-to-open segment; when L ≤ 6 mm, the groove length of the first-to-open segment is further reduced, thereby further improving the accuracy of the initiation position of the side wall.

In some embodiments, the first groove segment, the second groove segment, and the third groove segment are sequentially connected to form the continuously arranged first groove, and the first groove segment and the third groove segment are disposed opposite to each other. In this way, the first groove is a U-shaped groove and has a simple structure. In addition, the first groove segment, the second groove segment, and the third groove segment can define a predetermined pressure relief zone. When the battery cell is subjected to pressure relief, the predetermined pressure relief zone can be rapidly opened outward in a flipping manner, thereby increasing the pressure relief area of the battery cell and effectively improving the pressure relief rate of the battery cell.

In some embodiments, the first groove segment and the third groove segment are both smoothly connected to the second groove segment. In one aspect, after the side wall cracks along the second groove segment, the side wall can crack smoothly along the first groove segment and the third groove segment, thereby shortening the duration for the side wall to crack along the first groove and enabling the predetermined pressure relief zone to flip more smoothly toward the outside of the housing. In another aspect, the stress concentration coefficients at the connection position between the first groove segment and the second groove segment and the connection position between the third groove segment and the second groove segment can be effectively reduced, thereby improving the fatigue resistance of the side wall and effectively prolonging the service life of the battery cell.

In some embodiments, the second groove segment includes a first connecting segment, a second connecting segment, and the first-to-open segment, the first connecting segment connects the first-to-open segment and the first groove segment, and the second connecting segment connects the first-to-open segment and the third groove segment, where a minimum residual thickness of the first connecting segment, a minimum residual thickness of the second connecting segment, a minimum residual thickness of the first groove segment, and a minimum residual thickness of the third groove segment are all greater than a minimum residual thickness of the first-to-open segment. In this way, the first-to-open segment is a middle segment of the second groove segment. Thus, after the side wall cracks at the position of the first-to-open segment, the side wall can quickly crack along the first connecting segment and the second connecting segment located at two ends of the first-to-open segment, thereby shortening the duration for the side wall to crack along the second groove segment and further enabling the side wall to quickly crack along the first groove segment and the third groove segment.

In some embodiments, the minimum residual thickness of the first connecting segment is equal to the minimum residual thickness of the first groove segment; and/or the minimum residual thickness of the second connecting segment is equal to the minimum residual thickness of the third groove segment; and/or the minimum residual thickness of the first connecting segment is equal to the minimum residual thickness of the second connecting segment; and/or the minimum residual thickness of the first groove segment is equal to the minimum residual thickness of the third groove segment. In this way, the difficulty in forming the first groove can be effectively reduced.

In some embodiments, an extension trajectory line of the first groove segment is located in a first plane, and an included angle between a center line of the side wall and the first plane is α₁, where 30° ≤ α₁ ≤ 90°. Controlling the included angle between the center line of the side wall and the first plane within a reasonable range can reduce the risk of the side wall being torn due to continued cracking along the extension line of the first groove segment after the side wall cracks along the first groove segment.

In some embodiments, an extension trajectory line of the third groove segment is located in a second plane, and an included angle between the center line of the side wall and the second plane is α₂, where 30° ≤ α₂ ≤ 90°. Controlling the included angle between the center line of the side wall and the second plane within a reasonable range can reduce the risk of the side wall being torn due to continued cracking along the extension line of the third groove segment after the side wall cracks along the third groove segment.

In some embodiments, a groove width of the first groove is W₁, and a groove width of the second groove is W₂, where |W₂ - W₁| ≤ 0.1 mm. In this way, the difference between the groove width of the second groove and the groove width of the first groove is not excessively large. This helps reduce the difference in the amount of material displaced during machining of the first groove and the second groove and reduce the degree of deformation of the side wall, thereby helping improve the roundness of the side wall.

In some embodiments, the first groove is disposed on an outer surface of the side wall; and/or the second groove is disposed on an outer surface of the side wall. If the first groove is disposed on the outer surface of the side wall, the first groove can be machined from the outside of the side wall to reduce the machining difficulty of the first groove. If the second groove is disposed on the outer surface of the side wall, the second groove can be machined from the outside of the side wall to reduce the machining difficulty of the second groove.

In some embodiments, the first groove is a groove extending along a non-closed trajectory; and/or the second groove is a groove extending along a non-closed trajectory. If the first groove is a groove extending along a non-closed trajectory, the side wall can exhibit better fatigue resistance, thereby reducing the risk of the side wall cracking prematurely along the first groove during long-term cycling of the battery cell. In addition, after the side wall cracks along the first groove, the opened portion of the side wall is not prone to splashing. If the second groove is a groove extending along a non-closed trajectory, the side wall can exhibit better impact resistance, thereby reducing the risk of the side wall cracking along the second groove due to an impact force received near the second groove.

In some embodiments, along an axial direction of the side wall, openings are formed at two opposite ends of the side wall; the housing further includes two end covers, and the two end covers respectively close the openings at the two ends of the side wall. In this way, the side wall is of a hollow structure with openings formed at the two opposite ends, and the electrode assembly may be assembled into the side wall through any one of the openings, thereby reducing the assembly difficulty of the battery cell and improving the assembly quality of the battery cell. The side wall of such a structure is easier to form, and the length of the side wall (the dimension of the side wall in the axial direction) can be made larger, which is conducive to increasing the electric capacity of the battery cell.

In some embodiments, the housing includes a housing body and an end cover. The housing body includes the side wall and a bottom wall. Along an axial direction of the side wall, one end of the side wall is connected to the bottom wall, and an opening is formed at the other end of the side wall. The end cover closes the opening. The housing body is of a hollow structure with an opening formed at one end. Only one end cover is required to cooperate with the housing body in the battery cell, which can simplify the structure of the battery cell.

In a second aspect, the embodiments of the present application provide a battery. The battery includes a battery cell according to any one of the embodiments of the first aspect.

In a third aspect, the present application further provides an electric device. The electric device includes a battery cell according to any one of the embodiments of the first aspect, and the battery cell is configured to supply electric energy to the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a battery according to some embodiments of the present application;
FIG. 3 is an assembly diagram of a battery cell according to some embodiments of the present application;
FIG. 4 is an exploded view of the battery cell shown in FIG. 3;
FIG. 5 is a schematic structural diagram of the housing shown in FIG. 4;
FIG. 6 is a partial view of the housing shown in FIG. 5;
FIG. 7 is a cross-sectional view of the housing shown in FIG. 6 along line A-A;
FIG. 8 is a partially enlarged view of portion C in FIG. 7;
FIG. 9 is a partially enlarged view of portion E in FIG. 7;
FIG. 10 is a cross-sectional view of the housing shown in FIG. 6 along line B-B;
FIG. 11 is a partially enlarged view of portion F in FIG. 11; and
FIG. 12 is an exploded view of a battery cell according to some embodiments of the present application.

Reference numerals: 1-housing; 11-housing body; 12-end cover; 13-side wall; 131-groove group; 132-first groove; 1321-first groove segment; 1322-second groove segment; 1322a-first-to-open segment; 1322b-first connecting segment; 1322c-second connecting segment; 1323-third groove segment; 133-second groove; 134-predetermined pressure relief zone; 135-outer surface; 136-inner surface; 14-bottom wall; 2-electrode assembly; 21-tab; 3-electrode terminal; 4-current collecting member; 10-battery cell; 20-case; 201-first portion; 202-second portion; 100-battery; 200-controller; 300-motor; 1000-vehicle; O-center line; U-first plane; V-second plane; X-axial direction; and Y-circumferential direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated apparatus, are only exemplary and should not be construed as limiting the present application in any way.

The term "plurality of" used in the present application refers to two or more (including two).

In the embodiments of the present application, the battery cell may be a secondary battery. The secondary battery refers to a battery cell that can be reused by activating the active material through charging after the battery cell is discharged.

The battery cell includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separator. During the charging and discharging of the battery cell, active ions (such as lithium ions) are intercalated and deintercalated back and forth between the positive electrode and the negative electrode. The separator is disposed between the positive electrode and the negative electrode, which can reduce the risk of a short circuit between the positive electrode and the negative electrode while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator is a separation film. For the separation film, any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite) and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate clamped between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out of the electrode assembly. The tabs include a positive electrode tab and a negative electrode tab.

In some embodiments, the battery cell may include a housing. The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes. The prismatic battery cell includes a square-housing battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

In some embodiments, the battery may be an energy storage apparatus. The energy storage apparatus includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the reliability of the battery also needs to be considered.

To improve the reliability of the battery cell, a pressure relief structure may generally be disposed in the battery cell, and when thermal runaway occurs in the battery cell, the pressure inside the battery cell can be relieved through the pressure relief structure.

For a typical cylindrical battery cell, the pressure relief structure is disposed on the end cover. For example, a pressure relief groove is disposed on the end cover, and the pressure is relieved by the rupture of the end cover at the position of the pressure relief groove. In actual use, the pressure relief groove on the end cover is easily blocked by other components, resulting in delayed pressure relief.

To reduce the risk of the pressure relief groove being blocked by other components, the pressure relief groove may be disposed on the side wall of the housing of the battery cell. Since the battery cell is cylindrical, even if a plurality of battery cells are placed in a plurality of rows and a plurality of columns, the pressure relief groove on the side wall is unlikely to be blocked by other battery cells, so as to achieve normal pressure relief when thermal runaway occurs in the battery cell. When the pressure relief groove is machined on the side wall, the side wall will be subjected to a forming force from the machining tool, resulting in deformation of the side wall and affecting the roundness of the side wall.

To improve the roundness of the side wall, a central shaft may be inserted into the side wall before formation of the pressure relief groove, and the central shaft provides support for the side wall, thereby reducing the risk of deformation of the side wall during formation of the pressure relief groove. However, after the central shaft is pulled out from the side wall, residual stress remains at the position of the side wall where the pressure relief groove is formed. As the residual stress is released, the side wall deforms, resulting in a decrease in the roundness of the side wall. This affects the assembly quality of the battery cell and consequently affects the service life of the battery cell.

To effectively improve the service life of the battery cell, the embodiments of the present application provide a cylindrical battery cell in which a groove group is disposed on the side wall of the housing. The groove group includes a plurality of grooves spaced apart from each other along a circumferential direction of the side wall. The plurality of grooves include at least one first groove (pressure relief groove) and at least one second groove, and a minimum residual thickness of the second groove is greater than a minimum residual thickness of the first groove.

In such a battery cell, the plurality of grooves of the groove group further include a second groove, and the minimum residual thickness of the second groove is less than the minimum residual thickness of the first groove, such that the side wall is prone to cracking along the first groove and is not prone to cracking along the second groove when the battery cell is subjected to pressure relief. As a result, the first groove serves as a true pressure relief groove, and the second groove serves as a dummy pressure relief groove. The arrangement of the second groove on the side wall enables the side wall to release stress at the position where the second groove is formed, thereby alleviating deformation of the side wall caused by stress release of the side wall at the first groove. This can effectively improve the roundness of the side wall and improve the assembly quality of the battery cell, thereby prolonging the service life of the battery cell.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation, the following embodiments will be described by taking a vehicle as an example of the electric device.

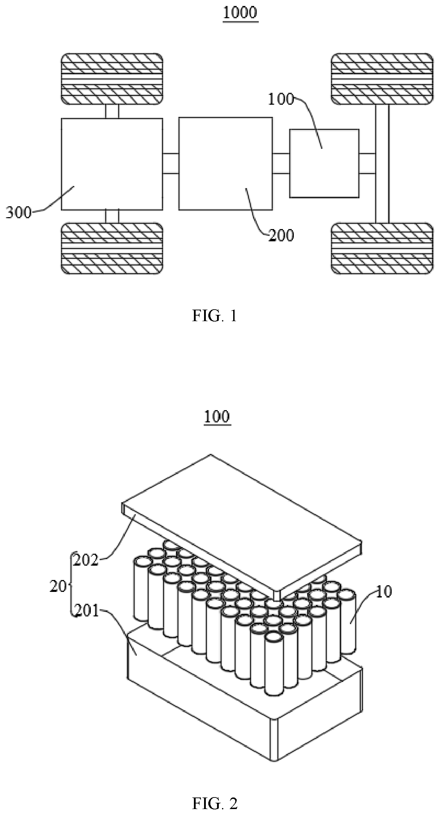

Referring to FIG. 1, FIG. 1 is a schematic structural diagram of a vehicle 1000 according to some embodiments of the present application. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000.

The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a battery cell 10 and a case 20. The battery cell 10 is accommodated in the case 20.

The case 20 is a component for accommodating the battery cell 10, the case 20 provides an accommodating space for the battery cell 10, and the case 20 may be of various structures. In some embodiments, the case 20 may include a first portion 201 and a second portion 202. The first portion 201 and the second portion 202 are mutually lidded with each other to define the accommodating space for accommodating the battery cell 10. The first portion 201 and the second portion 202 may be in various shapes, such as a rectangular parallelepiped and a cylinder. The first portion 201 may be of a hollow structure with one side open, the second portion 202 may also be of a hollow structure with one side open, and the open side of the first portion 201 is lidded with the open side of the second portion 202 to form the case 20 having the accommodating space. Alternatively, the first portion 201 may be of a hollow structure with one side open, the second portion 202 may be of a plate-shaped structure, and the open side of the first portion 201 is lidded with the second portion 202 to form the case 20 having the accommodating space. The first portion 201 and the second portion 202 may be sealed by using a sealing element. The sealing element may be a seal ring, a sealant, or the like.

In the battery 100, one or a plurality of battery cells 10 may be provided. If a plurality of battery cells 10 are provided, the plurality of battery cells 10 may be connected in series, in parallel, or in series-parallel. The series-parallel connection means that both series connection and parallel connection are present in the connection of the plurality of battery cells 10. The situation may be that the plurality of battery cells 10 are first connected in series, in parallel, or in series-parallel to form battery modules, and then the plurality of battery modules are connected in series, in parallel, or in series-parallel to form a whole to be accommodated in the case 20. Alternatively, all the battery cells 10 may be directly connected in series, in parallel, or in series-parallel, and then the whole formed by all the battery cells 10 is accommodated in the case 20.

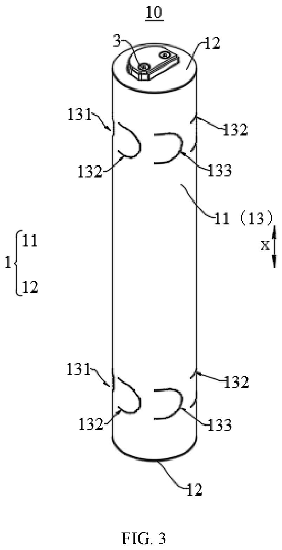

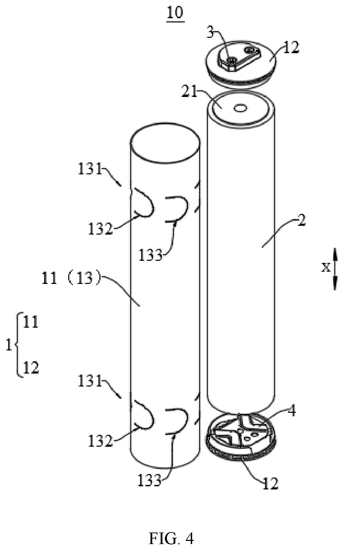

Referring to FIGs. 3 and 4, FIG. 3 is an assembly diagram of a battery cell 10 according to some embodiments of the present application, and FIG. 4 is an exploded view of the battery cell 10 shown in FIG. 3. The battery cell 10 may include a housing 1 and an electrode assembly 2. The electrode assembly 2 is accommodated in the housing 1.

In some embodiments, the housing 1 may include a housing body 11 and an end cover 12. The housing body 11 has an opening, and the end cover 12 closes the opening of the housing body 11.

The housing body 11 is a component for accommodating the electrode assembly 2. The housing body 11 may be of a hollow structure with an opening formed at one end, and the housing body 11 may be of a hollow structure with openings formed at two opposite ends. The housing body 11 may be in various shapes, such as a cylinder shape and a rectangular parallelepiped shape. The housing body 11 may be made of various materials, such as copper, iron, aluminum, steel, and an aluminum alloy.

The end cover 12 is a component that closes the opening of the housing body 11 to isolate the internal environment of the battery cell 10 from the external environment. The end cover 12 and the housing body 11 jointly define an accommodating space for accommodating the electrode assembly 2, an electrolytic solution, and other components. The end cover 12 may be connected to the housing body 11 by welding or winding to close the opening of the housing body 11. The shape of the end cover 12 may be adapted to the shape of the housing 1. For example, the housing body 11 is a rectangular parallelepiped structure, and the end cover 12 is a rectangular plate-shaped structure adapted to the housing 1. For another example, the housing body 11 is cylindrical, and the end cover 12 is a circular plate-shaped structure adapted to the housing body 11. The end cover 12 may also be made of various materials, such as copper, iron, aluminum, steel, an aluminum alloy, and plastic. The end cover 12 and the housing body 11 may be made of the same or different materials.

In an embodiment in which an opening is formed at one end of the housing body 11, one end cover 12 may be correspondingly provided. In an embodiment in which openings are formed at two opposite ends of the housing body 11, two end covers 12 may be correspondingly provided. The two end covers 12 respectively close the two openings of the housing body 11, and the two end covers 12 and the housing body 11 jointly define the accommodating space.

In some embodiments, the battery cell 10 may further include an electrode terminal 3. The electrode terminal 3 is disposed on the housing 1, and the electrode terminal 3 is configured to be electrically connected to a tab 21 of the electrode assembly 2 to input or output electric energy of the battery cell 10. The electrode terminal 3 may be disposed on the housing body 11 of the housing 1 or may be disposed on the end cover 12 of the housing 1. The electrode terminal 3 and the tab 21 may be directly connected. For example, the electrode terminal 3 is welded to the tab 21. The electrode terminal 3 and the tab 21 may also be indirectly connected. For example, the electrode terminal 3 and the tab 21 are indirectly connected through a current collecting member 4. The current collecting member 4 may be a metal conductor, such as copper, iron, aluminum, steel, or an aluminum alloy.

As an example, in the embodiments shown in FIGs. 3 and 4, openings are formed at two opposite ends of the housing body 11, the housing 1 includes two end covers 12, and the two end covers 12 respectively close the two openings of the housing body 11. The two end covers 12 are each provided with an electrode terminal 3, and tabs 21 are formed on two opposite ends of the electrode assembly 2. The tab 21 on one end of the electrode assembly 2 is a positive electrode tab, and the tab 21 on the other end is a negative electrode tab. The electrode terminal 3 on one end cover 12 is connected to the positive electrode tab through one current collecting member 4, and the electrode terminal 3 on the other end cover 12 is connected to the negative electrode tab through another current collecting member 4.

With continued reference to FIGs. 3 and 4, the embodiments of the present application provide a battery cell 10, which includes a housing 1 and an electrode assembly 2. The housing 1 is cylindrical, the electrode assembly 2 is accommodated in the housing 1, and the housing 1 includes a side wall 13 disposed around the electrode assembly 2. The side wall 13 is provided with a groove group 131. The groove group 131 includes a plurality of grooves spaced apart from each other along a circumferential direction Y of the side wall 13, the plurality of grooves include at least one first groove 132, and the side wall 13 is configured to be capable of cracking along at least a portion of the first groove 132 when the battery cell 10 is subjected to pressure relief. The plurality of grooves further include at least one second groove 133, and a minimum residual thickness of the second groove 133 is greater than a minimum residual thickness of the first groove 132.

The housing 1 is cylindrical, such that the battery cell 10 is a cylindrical battery cell. It can be understood that the overall structure formed by the housing 1 and the end cover 12 is cylindrical. It should be noted that in the embodiments of the present application, the housing 1 being cylindrical does not limit the housing 1 to a perfectly regular cylinder. The housing 1 may also be in an irregular cylindrical shape. For example, the housing 1 may be partially formed with protrusions or recesses, such that the housing 1 is substantially cylindrical.

The electrode assembly 2 may be of a wound structure. The electrode assembly 2 may be formed by winding a positive electrode plate, a separator, and a negative electrode plate, and the electrode assembly 2 may be cylindrical.

The side wall 13 is a portion of the housing 1 disposed around the electrode assembly 2, and at least a portion of the housing body 11 of the housing 1 may serve as the side wall 13. The side wall 13 is also cylindrical, the cross section of the side wall 13 is annular, and the cross section is perpendicular to an axial direction X of the side wall 13. In an embodiment in which the housing body 11 is of a hollow structure with an opening formed at one end, the portion of the housing body 11 disposed around the electrode assembly 2 is the side wall 13. It can be understood that the side wall 13 is only a portion of the housing body 11. In an embodiment in which the housing body 11 is of a hollow structure with openings formed at two opposite ends, the side wall 13 is the housing body 11.

One or a plurality of groove groups 131 may be disposed on the side wall 13. The plurality of grooves in the groove group 131 are spaced apart from each other along the circumferential direction Y of the side wall 13, such that two adjacent grooves in the groove group 131 are spaced apart by a certain distance along the circumferential direction Y of the side wall 13. There may be two, three, four, five, six, or more grooves in the groove group 131. The plurality of grooves in the groove group 131 may be uniformly distributed along the circumferential direction Y of the side wall 13, such that all the first grooves 132 and all the second grooves 133 in the groove group 131 are uniformly distributed along the circumferential direction Y of the side wall 13. Alternatively, the plurality of grooves in the groove group 131 may be non-uniformly distributed along the circumferential direction Y of the side wall 13.

The plurality of grooves include at least one first groove 132 and at least one second groove 133. That is, among the plurality of grooves of the groove group 131, at least one groove is the first groove 132, and at least one groove is the second groove 133. In the groove group 131, there may be one, two, three, four, or more first grooves 132, and there may be one, two, three, four, or more second grooves 133. In the groove group 131, the number of the first grooves 132 may be equal to the number of the second grooves 133, or the number of the first grooves 132 may be greater than the number of the second grooves 133, or the number of the second grooves 133 may be greater than the number of the first grooves 132. The sum of the number of the first grooves 132 and the number of the first grooves 132 may be an even number or an odd number. In the groove group 131, along the circumferential direction Y of the side wall 13, at least two first grooves 132 may be disposed adjacent to each other, or at least two second grooves 133 may be disposed adjacent to each other. Taking the case where three first grooves 132 and three second grooves 133 are provided in the groove group 131 as an example, the three first grooves 132 may be disposed adjacent to each other, and the three second grooves 133 may be disposed adjacent to each other. In the groove group 131, along the circumferential direction Y of the side wall 13, one or more second grooves 133 may be disposed between two adjacent first grooves 132, or one or more first grooves 132 may be disposed between two adjacent second grooves 133.

The first groove 132 is a pressure relief groove disposed on the side wall 13. When the battery cell 10 is subjected to pressure relief, the side wall 13 can crack along at least a portion of the first groove 132 to relieve the pressure inside the battery cell 10. That is, when the battery cell 10 is subjected to pressure relief, the side wall 13 may crack along a portion of the first groove 132, or the side wall 13 may crack along the entire first groove 132. The first groove 132 may be a groove extending along a non-closed trajectory; the first groove 132 may also be a groove extending along a closed trajectory.

The first groove 132 may be formed in various ways, such as stamping, milling, and the like. The first groove 132 may be disposed on an outer surface 135 (not shown in FIGs. 3 and 4) of the side wall 13, or may be disposed on an inner surface 136 (not shown in FIGs. 3 and 4) of the side wall 13. The first groove 132 may be a groove extending along a linear trajectory; that is, the first groove 132 is a linear groove. The first groove 132 may also be a groove extending along a non-linear trajectory. For example, the first groove 132 is an arc-shaped groove, an annular groove, a U-shaped groove, an X-shaped groove, a Y-shaped groove, a V-shaped groove, an H-shaped groove, or the like.

The shape of the second groove 133 may be the same as the shape of the first groove 132. For example, both the second groove 133 and the first groove 132 are U-shaped grooves. The shape of the second groove 133 may also be different from the shape of the first groove 132. For example, one of the first groove 132 and the second groove 133 is a U-shaped groove, and the other is an H-shaped groove. The volume of the second groove 133 may be equal to or different from the volume of the first groove 132. As an example, the volume of the first groove 132 is V₁, the volume of the second groove 133 is V₂, and the volume of the larger one of the first groove 132 and the second groove 133 is V₃, where 0 ≤ |V₁ - V₂|/V₃ ≤ 0.3. Thus, the difference in the amount of material displaced during the formation of the first groove 132 and the second groove 133 can be reduced, which is conducive to improving the roundness of the side wall 13. |V₁ - V₂|/V₃ may take any one point value of 0, 0.05, 0.1, 0.15, 0.2, 0.25, 0.3, and the like, or a value within a range defined by any two of the point values.

The second groove 133 may be formed in various ways, such as stamping, milling, and the like. The second groove 133 and the first groove 132 may be disposed on the same surface of the side wall 13. For example, both the second groove 133 and the first groove 132 are disposed on the outer surface 135 of the side wall 13. For another example, both the second groove 133 and the first groove 132 are disposed on the inner surface 136 of the side wall 13. The second groove 133 and the first groove 132 may also be disposed on different surfaces of the side wall 13. For example, one of the second groove 133 and the first groove 132 is disposed on the outer surface 135 of the side wall 13, and the other is disposed on the inner surface 136 of the side wall 13. The second groove 133 may be a groove extending along a non-closed trajectory; the second groove 133 may also be a groove extending along a closed trajectory.

The minimum residual thickness of the second groove 133 is greater than the minimum residual thickness of the first groove 132. Therefore, the second groove 133 is a groove having a larger minimum residual thickness in the groove group 131, and the first groove 132 is a groove having a smaller minimum residual thickness in the groove group 131. When thermal runaway occurs in the battery cell 10, the side wall 13 is more likely to crack at the position of the first groove 132 than at the position of the second groove 133. Therefore, the first groove 132 serves as a true pressure relief groove, and the second groove 133 serves as a dummy pressure relief groove. The minimum residual thickness of the first groove 132 is the minimum thickness of a residual portion of the first groove 132, and the residual portion of the first groove 132 may be the groove bottom wall of the first groove 132. The minimum residual thickness of the second groove 133 is the minimum thickness of a residual portion of the second groove 133, and the residual portion of the second groove 133 may be the groove bottom wall of the second groove 133. The minimum residual thickness of the first groove 132 may be measured at the thinnest position of the residual portion of the first groove 132, and the minimum residual thickness of the second groove 133 may be measured at the thinnest position of the residual portion of the second groove 133.

In the embodiments of the present application, the side wall 13 of the housing 1 is provided with a groove group 131, and the plurality of grooves of the groove group 131 include a first groove 132, such that the side wall 13 can crack along at least a portion of the first groove 132 when the battery cell 10 is subjected to pressure relief, thereby relieving the internal pressure of the battery cell 10 and enabling the side wall 13 of the housing 1 to have a pressure relief function. The plurality of grooves of the groove group 131 further include a second groove 133, and the minimum residual thickness of the second groove 133 is less than the minimum residual thickness of the first groove 132, such that the side wall 13 is prone to cracking along the first groove 132 and is not prone to cracking along the second groove 133 when the battery cell 10 is subjected to pressure relief. As a result, the first groove 132 serves as a true pressure relief groove, and the second groove 133 serves as a dummy pressure relief groove. The arrangement of the second groove 133 on the side wall 13 enables the side wall 13 to release stress at the position where the second groove 133 is formed, thereby alleviating deformation of the side wall 13 caused by stress release of the side wall 13 at the first groove 132. This can effectively improve the roundness of the side wall 13 and improve the assembly quality of the battery cell 10, thereby prolonging the service life of the battery cell 10.

Taking the welding of the end cover 12 and the side wall 13 of the housing 1 as an example, after the roundness of the side wall 13 is improved by providing the second groove 133, the welding quality between the end cover 12 and the side wall 13 can be effectively improved, and the connection strength between the end cover 12 and the side wall 13 can be improved, thereby prolonging the service life of the battery cell 10.

In some embodiments, along the circumferential direction Y of the side wall 13, the first grooves 132 and the second grooves 133 are alternately arranged.

In the embodiments, one or a plurality of first grooves 132 may be provided, and one or a plurality of second grooves 133 may be provided. Since the first grooves 132 and the second grooves 133 are alternately arranged along the circumferential direction Y of the side wall 13, the number of the first grooves 132 is equal to the number of the second grooves 133 in the groove group 131.

As an example, in the embodiments shown in FIGs. 3 and 4, three first grooves 132 and three second grooves 133 are provided, such that the groove group 131 has a total of six grooves. The grooves in the groove group 131 are arranged in a sequence of first groove 132 - second groove 133 - first groove 132 - second groove 133 - first groove 132 - second groove 133, so as to achieve the alternating arrangement of the first grooves 132 and the second grooves 133.

In the embodiments, the first grooves 132 and the second grooves 133 in the groove group 131 are alternately arranged along the circumferential direction Y of the side wall 13, such that each second groove 133 can alleviate deformation of the side wall 13 caused by the stress released from the two adjacent first grooves 132 located on both sides of the second groove, thereby further improving the roundness of the side wall 13.

In some embodiments, a plurality of first grooves 132 and a plurality of second grooves 133 are provided in the groove group 131.

In the embodiments, in the groove group 131, there may be two, three, four, or more first grooves 132, and there may be two, three, four, or more second grooves 133. The number of the first grooves 132 may be equal to or different from the number of the second grooves 133 in the groove group 131.

In the embodiments, a plurality of first grooves 132 are provided in the groove group 131, which can improve the pressure relief capability of the side wall 13, such that the side wall 13 can crack along the plurality of first grooves 132 when thermal runaway occurs in the battery cell 10, thereby relieving the pressure inside the battery cell 10 from a plurality of positions of the side wall 13. A plurality of second grooves 133 are provided in the groove group 131, and the side wall 13 can release stress at positions where the plurality of second grooves 133 are provided, thereby further reducing the degree of deformation of the side wall 13 caused by the first groove 132, and further improving the roundness of the side wall 13.

In some embodiments, the sum of the number of the first grooves 132 and the number of the second grooves 133 in the groove group 131 is N, where 2 ≤ N ≤ 20.

N is an integer and may be 2, 3, 4, 5, 6, 7, 8, 9, 10, 11, 12, 13, 14, 15, 16, 17, 18, 19, or 20.

In the embodiments, the number of the first grooves 132 may be equal to or different from the number of the second grooves 133 in the groove group 131. If the number of the first grooves 132 is different from the number of the second grooves 133 in the groove group 131, the number of the first grooves 132 may be greater than the number of the second grooves 133, or the number of the second grooves 133 may be greater than the number of the first grooves 132. Taking N = 6 as an example, three first grooves 132 and three second grooves 133 may be provided, such that the number of the first grooves 132 is equal to the number of the second grooves 133; or four first grooves 132 may be provided, and two second grooves 133 may be provided, such that the number of the first grooves 132 is greater than the number of the second grooves 133; or two first grooves 132 may be provided, and four second grooves 133 may be provided, such that the number of the second grooves 133 is greater than the number of the first grooves 132.

In the embodiments, when 2 ≤ N ≤ 20, the sum of the number of the first grooves 132 and the number of the second grooves 133 in the groove group 131 falls within a reasonable range, thereby reducing the risk of insufficient strength of the side wall 13 caused by an excessively large sum of the number of the first grooves 132 and the number of the second grooves 133.

In some embodiments, 6 ≤ N ≤ 15.

In the embodiments, N may be 6, 7, 8, 9, 10, 11, 12, 13, 14, or 15.

In the embodiments, when N ≥ 6, a sufficient number of grooves are provided on the side wall 13, which is conducive to improving the roundness of the side wall 13; when N ≤ 15, the total number of the first grooves 132 and the second grooves 133 is further reduced, thereby further increasing the strength of the side wall 13.

In some embodiments, the number of the first grooves 132 is equal to the number of the second grooves 133 in the groove group 131.

It can be understood that if there is one first groove 132 in the groove group 131, there is also one second groove 133 in the groove group 131; if there are two first grooves 132 in the groove group 131, there are also two second grooves 133 in the groove group 131; if there are three first grooves 132 in the groove group 131, there are also three second grooves 133 in the groove group 131; if there are four first grooves 132 in the groove group 131, there are also four second grooves 133 in the groove group 131; if there are five first grooves 132 in the groove group 131, there are also five second grooves 133 in the groove group 131; if there are six first grooves 132 in the groove group 131, there are also six second grooves 133 in the groove group 131.

In the embodiments, the number of the first grooves 132 is equal to the number of the second grooves 133 in the groove group 131, such that half of the plurality of grooves in the groove group 131 are the first grooves 132, and the other half are the second grooves 133. This can ensure both the pressure relief capability of the side wall 13 and the roundness of the side wall 13.

In some embodiments, along the circumferential direction Y of the side wall 13, the plurality of grooves in the groove group 131 are uniformly distributed on the side wall 13.

It can be understood that in the groove group 131, the minimum distance between two adjacent grooves in the circumferential direction Y of the side wall 13 is equal. The number of the grooves in the groove group 131 is N, and along the circumferential direction Y of the side wall 13, the grooves may be provided at intervals of 360°/N.

As an example, in the embodiments shown in FIGs. 3 and 4, six grooves are provided in the groove group 131, with three first grooves 132 and three second grooves 133. The first grooves 132 and the second grooves 133 are alternately arranged along the circumferential direction Y of the side wall 13, and adjacent first grooves 132 are spaced apart by 60°.

In the embodiments, the plurality of grooves in the groove group 131 are uniformly distributed on the side wall 13 along the circumferential direction Y of the side wall 13, making the force more uniform during the formation of the grooves on the side wall 13, thereby further improving the roundness of the side wall 13.

In some embodiments, the side wall 13 is provided with a plurality of groove groups 131, and the plurality of groove groups 131 are spaced apart from each other along the axial direction X of the side wall 13.

The plurality of groove groups 131 are spaced apart from each other along the axial direction X of the side wall 13; that is, along the axial direction X of the side wall 13, two adjacent groove groups 131 are spaced apart by a certain distance. There may be two, three, four, or more groove groups 131 on the side wall 13.

As an example, in the embodiments shown in FIGs. 3 and 4, two groove groups 131 are provided on the side wall 13, and the two groove groups 131 are spaced apart from each other along the axial direction X of the side wall 13. When thermal runaway occurs in the battery cell 10, the emissions located at the two ends inside the battery cell 10 may be discharged separately through the two groove groups 131, and the emissions located in the middle of the battery cell 10 may be discharged through the two groove groups 131 simultaneously.

In the embodiments, the side wall 13 is provided with a plurality of groove groups 131, and the plurality of groove groups 131 are spaced apart from each other along the axial direction X of the side wall 13. This structure enables the emissions inside the housing 1 to be discharged from the regions of the first grooves 132 in the plurality of groove groups 131 when thermal runaway occurs in the battery cell 10, thereby increasing the pressure relief rate of the battery cell 10. The emissions include, but are not limited to: electrolytic solutions, dissolved or split positive and negative electrode plates, fragments of a separator, high-temperature and high-pressure gas generated by reaction, flame, and the like.

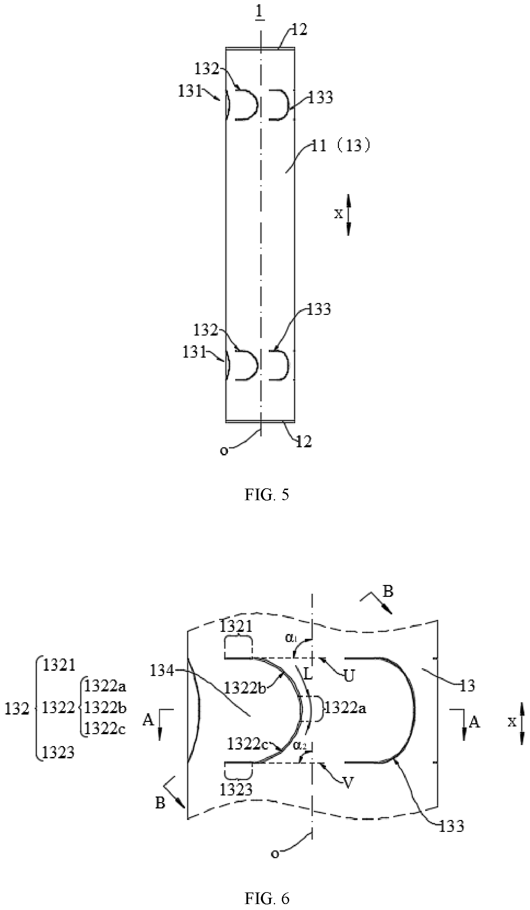

In some embodiments, referring to FIGs. 5 and 6, FIG. 5 is a schematic structural diagram of the housing 1 shown in FIG. 4; and FIG. 6 is a partial view of the housing 1 shown in FIG. 5. The first groove 132 is provided with a first-to-open segment 1322a that preferentially cracks. The first groove 132 includes a first groove segment 1321, a second groove segment 1322, and a third groove segment 1323. The second groove segment 1322 connects the first groove segment 1321 and the third groove segment 1323. At least a portion of the second groove segment 1322 forms the first-to-open segment 1322a.

The first-to-open segment 1322a is a portion of the first groove 132 that preferentially cracks. When the battery cell 10 is subjected to pressure relief, the side wall 13 cracks earlier at the position of the first-to-open segment 1322a than at the positions of other regions of the first groove 132 of the side wall 13. That is, when thermal runaway occurs in the battery cell 10, the internal pressure of the battery cell 10 gradually increases. The first-to-open segment 1322a is more likely to crack than the other regions in the first groove 132, and the side wall 13 preferentially cracks at the position of the first-to-open segment 1322a. The strength of a residual portion of the first-to-open segment 1322a may be less than the strength of a residual portion of the other regions of the first groove 132, such that the side wall 13 preferentially cracks at the position of the first-to-open segment 1322a.

The first groove segment 1321, the second groove segment 1322, and the third groove segment 1323 are three segments of the first groove 132. The second groove segment 1322 is an intermediate segment of the first groove 132, and the second groove segment 1322 serves to connect the first groove segment 1321 and the third groove segment 1323. The situation may be that a portion of the second groove segment 1322 is the first-to-open segment 1322a, or that the entire second groove segment 1322 is the first-to-open segment 1322a. The first groove segment 1321 may extend along a linear trajectory. In this case, the first groove segment 1321 is parallel to the axial direction X of the side wall 13; the first groove segment 1321 may also extend along an arc-shaped trajectory located within a plane. For example, the first groove segment 1321 extends along the circumferential direction Y of the side wall 13. The first groove segment 1321 may also extend along a spatial curve trajectory. The second groove segment 1322 may extend along a linear trajectory. In this case, the second groove segment 1322 is parallel to the axial direction X of the side wall 13; the second groove segment 1322 may also extend along an arc-shaped trajectory located within a plane. For example, the second groove segment 1322 extends along the circumferential direction Y of the side wall 13. The second groove segment 1322 may also extend along a spatial curve trajectory. The third groove segment 1323 may extend along a linear trajectory. In this case, the third groove segment 1323 is parallel to the axial direction X of the side wall 13; the third groove segment 1323 may also extend along an arc-shaped trajectory located within a plane. For example, the third groove segment 1323 extends along the circumferential direction Y of the side wall 13. The third groove segment 1323 may also extend along a spatial curve trajectory. The extension directions of the first groove segment 1321, the second groove segment 1322, and the third groove segment 1323 may be the same. For example, the first groove segment 1321, the second groove segment 1322, and the third groove segment 1323 are collinear and all extend along the axial direction X of the side wall 13. The residual thicknesses and/or the groove depths of both the first groove segment 1321 and the third groove segment 1323 are different from those of the second groove segment 1322, so as to distinguish the three groove segments. The extension directions of the first groove segment 1321, the second groove segment 1322, and the third groove segment 1323 may also be different. For example, the first groove segment 1321, the second groove segment 1322, and the third groove segment 1323 may form a U-shaped or H-shaped structure, or the like, such that the first groove 132 is a U-shaped groove, an H-shaped groove, or the like.

In the embodiments, the first groove 132 includes a first groove segment 1321, a second groove segment 1322, and a third groove segment 1323, the second groove segment 1322 connects the first groove segment 1321 and the third groove segment 1323, and at least a portion of the second groove segment 1322 forms the first-to-open segment 1322a of the first groove 132. When thermal runaway occurs in the battery cell 10, the side wall 13 preferentially cracks at the position of the first-to-open segment 1322a of the second groove segment 1322, such that the second groove segment 1322 located in the middle cracks earlier than the first groove segment 1321 and the third groove segment 1323, and the resulting crack can propagate along the first groove segment 1321 and the third groove segment 1323. After the side wall 13 cracks at the position of the first-to-open segment 1322a, the side wall can quickly crack along the first groove segment 1321 and the third groove segment 1323, thereby shortening the duration for the side wall 13 to crack along the first groove 132. This allows for timely pressure relief and reduces the risk of fire or explosion during thermal runaway of the battery cell 10, thereby effectively improving the reliability of the battery cell 10.

In some embodiments, with continued reference to FIG. 6, the first groove segment 1321, the second groove segment 1322, and the third groove segment 1323 are sequentially connected to form the continuously arranged first groove 132, and on an extension path of the first groove 132, a midpoint of the first groove 132 is located in the first-to-open segment 1322a.

The first groove segment 1321, the second groove segment 1322, and the third groove segment 1323 are sequentially connected; that is, one end of the first groove segment 1321 is connected to one end of the second groove segment 1322, and the other end of the second groove segment 1322 is connected to one end of the third groove segment 1323. The first groove segment 1321, the second groove segment 1322, and the third groove segment 1323 may form a U-shaped structure, a Z-shaped structure, or the like. On the extension path of the first groove 132, the distance from the midpoint of the first groove 132 to an end, distal to the second groove segment 1322, of the first groove segment 1321 is equal to the distance from the midpoint of the first groove 132 to an end, distal to the second groove segment 1322, of the third groove segment 1323, and both distances are half of the groove length of the first groove 132. On an extension path of the first groove segment 1321, the groove length of the first groove segment 1321 is a first groove length; on an extension path of the second groove segment 1322, the groove length of the second groove segment 1322 is a second groove length; and on an extension path of the third groove segment 1323, the groove length of the third groove segment 1323 is a third groove length. On the extension path of the first groove 132, the groove length of the first groove 132 is equal to the sum of the first groove length, the second groove length, and the third groove length.

As an example, on the extension path of the first groove 132, the midpoint of the first groove 132 is located between two ends of the first-to-open segment 1322a.

In the embodiments, the midpoint of the first groove 132 is located in the first-to-open segment 1322a, such that the first-to-open segment 1322a is located in the middle region of the first groove 132, which can shorten the difference between the crack paths extending from the first-to-open segment 1322a toward two ends of the first groove 132 after the side wall 13 cracks at the position of the first-to-open segment. This is conducive to the synchronous cracking of the side wall 13 along the first groove segment 1321 and the third groove segment 1323, thereby further shortening the duration for the side wall 13 to crack along the first groove 132, and improving the timeliness of pressure relief of the battery cell 10.

In some embodiments, on the extension path of the second groove segment 1322, the midpoint of the second groove segment 1322 is located in the first-to-open segment 1322a.

In the embodiments, the first groove segment 1321, the second groove segment 1322, and the third groove segment 1323 may be sequentially connected. For example, the first groove segment 1321, the second groove segment 1322, and the third groove segment 1323 form a U-shaped structure. Alternatively, the connection position between the first groove segment 1321 and the second groove segment 1322 may be offset from two ends of the first groove segment 1321, and the connection position between the third groove segment 1323 and the second groove segment 1322 may be offset from two ends of the third groove segment 1323. For example, the first groove segment 1321, the second groove segment 1322, and the third groove segment 1323 form an H-shaped structure.

In an embodiment in which the first groove segment 1321, the second groove segment 1322, and the third groove segment 1323 are sequentially connected, the midpoint of the second groove segment 1322 may coincide with the midpoint of the first groove 132, or may not coincide therewith. It can be understood that on the extension path of the first groove 132, if the groove length of the first groove segment 1321 is equal to the groove length of the third groove segment 1323, the midpoint of the second groove segment 1322 coincides with the midpoint of the first groove 132; on the extension path of the first groove 132, if the groove length of the first groove segment 1321 is different from the groove length of the third groove segment 1323, the midpoint of the second groove segment 1322 does not coincide with the midpoint of the first groove 132.

As an example, in the embodiment shown in FIG. 6, the first groove segment 1321, the second groove segment 1322, and the third groove segment 1323 are sequentially connected. On the extension path of the first groove 132, the groove length of the first groove segment 1321 is equal to the groove length of the third groove segment 1323, and the midpoint of the second groove segment 1322 is located between two ends of the first-to-open segment 1322a.

In the embodiments, the midpoint of the second groove segment 1322 is located in the first-to-open segment 1322a, which can shorten the difference between the crack paths extending from the first-to-open segment 1322a toward two ends of the second groove segment 1322 after the side wall 13 cracks at the position of the first-to-open segment. As a result, when thermal runaway occurs in the battery cell 10, the side wall 13 can quickly crack along the second groove segment 1322, thereby enabling the side wall 13 to quickly crack along the first groove segment 1321 and the third groove segment 1323, and effectively shortening the duration for the side wall 13 to crack along the first groove 132.

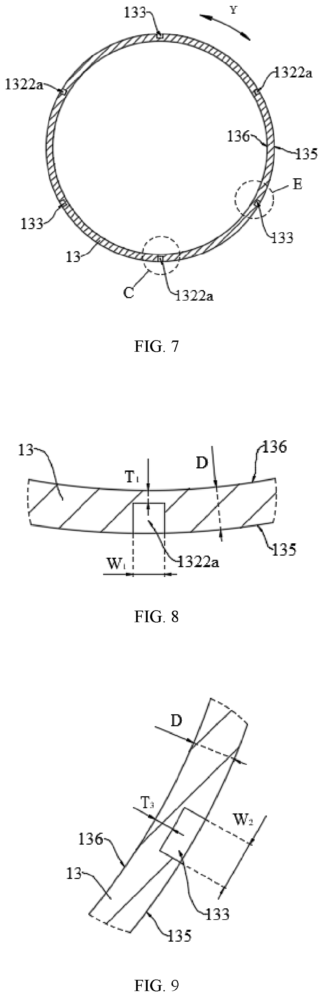

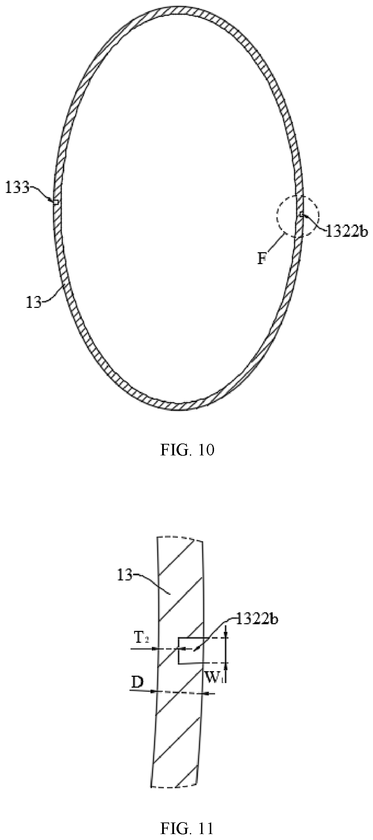

In some embodiments, referring to FIGs. 7 to 11, FIG. 7 is a cross-sectional view of the housing 1 shown in FIG. 6 along line A-A; FIG. 8 is a partially enlarged view of portion C in FIG. 7; FIG. 9 is a partially enlarged view of portion E in FIG. 7; FIG. 10 is a cross-sectional view of the housing 1 shown in FIG. 6 along line B-B; and FIG. 11 is a partially enlarged view of portion F in FIG. 11. The minimum residual thickness of the first-to-open segment 1322a is T₁, the minimum residual thickness of the other regions of the first groove 132 is T₂, and the minimum residual thickness of the second groove 133 is T₃, where T₁ < T₂ and T₁ < T₃.

In the embodiments, T₂ = T₃, or T₂ < T₃, or T₂ > T₃.

The minimum residual thickness of the first-to-open segment 1322a is the minimum residual thickness of the first groove 132. The minimum residual thickness of the first-to-open segment 1322a is the minimum thickness of the residual portion of the first-to-open segment 1322a, the minimum thickness of the residual portion of the first-to-open segment 1322a may be measured at the thinnest position of the residual portion of the first-to-open segment 1322a, and the residual portion of the first-to-open segment 1322a may form the groove bottom wall of the first-to-open segment 1322a. The minimum residual thickness of the other regions of the first groove 132 is the minimum thickness of the residual portion of the other regions of the first groove 132, the minimum thickness of the residual portion of the other regions of the first groove 132 may be measured at the thinnest position of the residual portion of the other regions of the first groove 132, and the residual portion of the other regions of the first groove 132 may form the groove bottom wall of the other regions of the first groove 132. The thickness of the residual portion of the first-to-open segment 1322a may be uniform or may be non-uniform; the thickness of the residual portion of the other regions of the first groove 132 may be uniform or may be non-uniform.

As an example, the maximum residual thickness of the first-to-open segment 1322a is also less than the minimum residual thickness of the other regions of the first groove 132, such that the maximum thickness of the residual portion of the first-to-open segment 1322a is less than the minimum thickness of the residual portion of the other regions of the first groove 132. Accordingly, the residual thickness of the first-to-open segment 1322a is less than the residual thickness of the other regions of the first groove 132.

The other regions of the first groove 132 are the remaining portions of the first groove 132, excluding the first-to-open segment 1322a. The other regions of the first groove 132 include a first groove segment 1321 and a third groove segment 1323. In an embodiment in which the entire second groove segment 1322 forms the first-to-open segment 1322a, the first groove segment 1321 and the third groove segment 1323 may constitute the other regions of the first groove 132, and the smaller one of the minimum residual thickness of the first groove segment 1321 and the minimum residual thickness of the third groove segment 1323 may be the minimum residual thickness of the other regions of the first groove 132; in an embodiment in which only a portion of the second groove segment 1322 forms the first-to-open segment 1322a, the other portion of the second groove segment 1322, the first groove segment 1321, and the third groove segment 1323 may constitute the other regions of the first groove 132, and the smallest one of the minimum residual thickness of the other portion of the second groove segment 1322, the minimum residual thickness of the first groove segment 1321, and the minimum residual thickness of the third groove segment 1323 may be the minimum residual thickness of the other regions of the first groove 132.

As an example, the maximum groove depth of the first-to-open segment 1322a is greater than the maximum groove depth of the other regions of the first groove 132, and the sum of the maximum groove depth of the first-to-open segment 1322a and the minimum residual thickness of the first-to-open segment 1322a, and the sum of the maximum groove depth of the other regions of the first groove 132 and the minimum residual thickness of the other regions of the first groove 132 are both equal to the wall thickness of the side wall 13.

In the embodiments, T₁ < T₂ and T₁ < T₃, such that the strength of the residual portion in the other regions of the first groove 132 and the strength of the residual portion of the second groove 133 are both greater than the strength of the residual portion of the first-to-open segment 1322a. Therefore, the side wall 13 can preferentially crack at the first-to-open segment 1322a when thermal runaway occurs in the battery cell 10, such that when thermal runaway occurs in the battery cell 10, the side wall 13 can crack along the first groove 132, but the side wall is less likely to crack along the second groove 133.

In other embodiments, the side wall 13 may also be enabled to preferentially crack at the first-to-open segment 1322a during thermal runaway of the battery cell 10 through other methods. For example, when the minimum residual thickness of the first-to-open segment 1322a is equal to the minimum residual thickness of the other regions of the first groove 132, at least a portion of the residual portion of the second groove segment 1322 may be subjected to heat treatment to reduce the strength of the portion, so as to correspondingly form the first-to-open segment 1322a and cause the strength of the residual portion of the first-to-open segment 1322a to be less than the strength of the residual thickness portion of the other regions of the first groove 132.

In some embodiments, |T₃ - T₂| ≤ 0.1 mm.

|T₃ - T₂| may take any one point value of 0 mm, 0.01 mm, 0.02 mm, 0.03 mm, 0.04 mm, 0.05 mm, 0.06 mm, 0.07 mm, 0.08 mm, 0.09 mm, and 0.1 mm, or a value within a range defined by any two of the point values.

In the embodiments, when |T₃ - T₂| ≤ 0.1 mm, the difference between the groove depth of the second groove 133 and the groove depth of the other regions of the first groove 132 is not excessively large. This helps reduce the difference in the amount of material displaced during machining of the first groove 132 and the second groove 133 and reduce the degree of deformation of the side wall 13, thereby helping improve the roundness of the side wall 13.

In some embodiments, with continued reference to FIG. 8, the minimum residual thickness of the first-to-open segment 1322a is T₁, and the wall thickness of the side wall 13 is D, where 0.04 ≤ T₁/D ≤ 0.9.

T₁/D may take any one point value of 0.04, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, and 0.9, or a value within a range defined by any two of the point values.

When T₁/D ≥ 0.04, the proportion of the minimum residual thickness of the first-to-open segment 1322a in the wall thickness of the side wall 13 is not excessively small, such that the residual portion of the first-to-open segment 1322a has sufficient strength, thereby reducing the risk of the side wall 13 cracking prematurely along the first-to-open segment 1322a during long-term cycling of the battery cell 10 and prolonging the service life of the battery cell 10. When T₁/D ≤ 0.9, the proportion of the minimum residual thickness of the first-to-open segment 1322a in the wall thickness of the side wall 13 is not excessively large, such that the side wall 13 can crack at the first-to-open segment 1322a in a more timely manner when thermal runaway occurs in the battery cell 10, thereby shortening the duration for the side wall 13 to crack along the first groove 132 and reducing the risk of fire or explosion of the battery cell 10.

In some embodiments, 0.1 ≤ T₁/D ≤ 0.5.

In the embodiments, T₁/D may take any one point value of 0.1, 0.12, 0.15, 0.18, 0.2, 0.22, 0.25, 0.28, 0.3, 0.32, 0.35, 0.38, 0.4, 0.42, 0.45, and 0.5, or a value within a range defined by any two of the point values.

In the embodiments, when T₁/D ≥ 0.1, the proportion of the minimum residual thickness of the first-to-open segment 1322a in the wall thickness of the side wall 13 is further increased, thereby further reducing the risk of the side wall 13 cracking prematurely along the first-to-open segment 1322a during long-term cycling of the battery cell 10; when T₁/D ≤ 0.5, the proportion of the minimum residual thickness of the first-to-open segment 1322a in the wall thickness of the side wall 13 is further decreased, thereby further reducing the risk of fire or explosion of the battery cell 10.

In some embodiments, with continued reference to FIG. 6, on the extension path of the second groove segment 1322, the groove length of the first-to-open segment 1322a is L, where 0.2 mm ≤ L ≤ 10 mm.

In the embodiments, L may take any one point value of 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, and 10 mm, or a value within a range defined by any two of the point values.

When L ≥ 0.2 mm, the groove length of the first-to-open segment 1322a is not excessively small, which can reduce the machining difficulty of the first-to-open segment 1322a; when L ≤ 10 mm, the groove length of the first-to-open segment 1322a is not excessively large, which can achieve precise control over the initiation position of the side wall 13 and improve the accuracy of the initiation position.

In some embodiments, 1 mm ≤ L ≤ 6 mm.

In the embodiments, in the embodiments, L may take any one point value of 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, 5 mm, 5.2 mm, 5.5 mm, 5.8 mm, and 6 mm, or a value within a range defined by any two of the point values.

In the embodiments, when L ≥ 1 mm, the groove length of the first-to-open segment 1322a is further increased, thereby further reducing the machining difficulty of the first-to-open segment 1322a; when L ≤ 6 mm, the groove length of the first-to-open segment 1322a is further reduced, thereby further improving the accuracy of the initiation position of the side wall 13.

In some embodiments, with continued reference to FIG. 6, the first groove segment 1321, the second groove segment 1322, and the third groove segment 1323 are sequentially connected to form the continuously arranged first groove 132, and the first groove segment 1321 and the third groove segment 1323 are disposed opposite to each other.

The first groove segment 1321 and the third groove segment 1323 may be arranged in parallel; the first groove segment 1321 and the third groove segment 1323 may also be arranged at a non-zero included angle. For example, an angle between the first groove segment 1321 and the third groove segment 1323 is less than or equal to 10°. The first groove segment 1321 and the third groove segment 1323 may extend along an arc-shaped trajectory. The center of the arc-shaped trajectory is located on a center line O of the side wall 13, and the plane where the arc-shaped trajectory is located is perpendicular to the center line O of the side wall 13. The first groove segment 1321 and the third groove segment 1323 may also extend along an elliptical trajectory, the plane where the elliptical trajectory is located is not perpendicular to the center line O of the side wall 13, and an included angle between the plane where the elliptical trajectory is located and the center line O of the side wall 13 may be greater than 0° and less than 90°.

The first groove segment 1321, the second groove segment 1322, and the third groove segment 1323 can define a predetermined pressure relief zone 134, and the predetermined pressure relief zone 134 can flip outward and open after the side wall 13 cracks along at least a portion of the first groove 132. It can be understood that the first groove segment 1321, the second groove segment 1322, and the third groove segment 1323 are located at the edge position of the predetermined pressure relief zone 134.

In the embodiments, the first groove segment 1321, the second groove segment 1322, and the third groove segment 1323 are sequentially connected, and the first groove segment 1321 and the third groove segment 1323 are disposed opposite to each other, such that the first groove 132 is a U-shaped groove and has a simple structure. In addition, the first groove segment 1321, the second groove segment 1322, and the third groove segment 1323 can define the predetermined pressure relief zone 134. When the battery cell 10 is subjected to pressure relief, the predetermined pressure relief zone 134 can be rapidly opened outward in a flipping manner, thereby increasing the pressure relief area of the battery cell 10 and effectively improving the pressure relief rate of the battery cell 10.

In some embodiments, the first groove segment 1321 and the third groove segment 1323 are both smoothly connected to the second groove segment 1322.

As an example, the second groove segment 1322 extends along a spatial curve trajectory, and the second groove segment 1322 is an arc-shaped groove in the case where the side wall 13 is unfolded into a flat plate structure. The first groove segment 1321 and the third groove segment 1323 are both tangent to the second groove segment 1322, such that the first groove segment 1321 and the third groove segment 1323 are both smoothly connected to the second groove segment 1322.

In the embodiments, the first groove segment 1321 and the third groove segment 1323 are both smoothly connected to the second groove segment 1322. In one aspect, after the side wall 13 cracks along the second groove segment 1322, the side wall can crack smoothly along the first groove segment 1321 and the third groove segment 1323, thereby shortening the duration for the side wall 13 to crack along the first groove 132 and enabling the predetermined pressure relief zone 134 to flip more smoothly toward the outside of the housing 1. In another aspect, the stress concentration coefficients at the connection position between the first groove segment 1321 and the second groove segment 1322 and the connection position between the third groove segment 1323 and the second groove segment 1322 can be effectively reduced, thereby improving the fatigue resistance of the side wall 13 and effectively prolonging the service life of the battery cell 10.

In some embodiments, the second groove segment 1322 includes a first connecting segment 1322b, a second connecting segment 1322c, and a first-to-open segment 1322a. The first connecting segment 1322b connects the first-to-open segment 1322a and the first groove segment 1321, and the second connecting segment 1322c connects the first-to-open segment 1322a and the third groove segment 1323. The minimum residual thickness of the first connecting segment 1322b, the minimum residual thickness of the second connecting segment 1322c, the minimum residual thickness of the first groove segment 1321, and the minimum residual thickness of the third groove segment 1323 are all greater than the minimum residual thickness of the first-to-open segment 1322a.

The first connecting segment 1322b, the second connecting segment 1322c, and the first-to-open segment 1322a are three segments of the second groove segment 1322, and the first connecting segment 1322b, the first-to-open segment 1322a, and the second connecting segment 1322c are sequentially connected. The first connecting segment 1322b is a portion of the second groove segment 1322 connected between the first-to-open segment 1322a and the first groove segment 1321, and the second connecting segment 1322c is a portion of the second groove segment 1322 connected between the first-to-open segment 1322a and the third groove segment 1323. The minimum residual thickness of the first connecting segment 1322b is the minimum thickness of a residual portion of the first connecting segment 1322b, and the residual portion of the first connecting segment 1322b may be the groove bottom wall of the first connecting segment 1322b. The minimum residual thickness of the second connecting segment 1322c is the minimum thickness of a residual portion of the second connecting segment 1322c, and the residual portion of the second connecting segment 1322c may be the groove bottom wall of the second connecting segment 1322c. The minimum residual thickness of the first groove segment 1321 is the minimum thickness of a residual portion of the first groove segment 1321, and the residual portion of the first groove segment 1321 may be the groove bottom wall of the first groove segment 1321. The minimum residual thickness of the third groove segment 1323 is the minimum thickness of a residual portion of the third groove segment 1323, and the residual portion of the third groove segment 1323 may be the groove bottom wall of the third groove segment 1323. The minimum residual thickness of the first connecting segment 1322b, the minimum residual thickness of the second connecting segment 1322c, the minimum residual thickness of the first groove segment 1321, and the minimum residual thickness of the third groove segment 1323 may be equal, or at least two of them may be different from each other. The first connecting segment 1322b, the second connecting segment 1322c, the first groove segment 1321, and the third groove segment 1323 form the other regions of the first groove 132. The smallest one of the minimum residual thickness of the first connecting segment 1322b, the minimum residual thickness of the second connecting segment 1322c, the minimum residual thickness of the first groove segment 1321, and the minimum residual thickness of the third groove segment 1323 is the minimum residual thickness of the other regions of the first groove 132.

On the extension path of the second groove segment 1322, the groove length of the first connecting segment 1322b may be equal to or different from the groove length of the second connecting segment 1322c. As an example, in the embodiment shown in FIG. 6, the groove length of the first connecting segment 1322b is equal to the groove length of the second connecting segment 1322c, such that the first-to-open segment 1322a is centrally disposed in the second groove segment 1322.

In the embodiments, the minimum residual thickness of the first connecting segment 1322b, the minimum residual thickness of the second connecting segment 1322c, the minimum residual thickness of the first groove segment 1321, and the minimum residual thickness of the third groove segment 1323 are all greater than the minimum residual thickness of the first-to-open segment 1322a, such that the strength of the residual portion of the first-to-open segment 1322a is less than the strength of the residual portion of the first connecting segment 1322b, the strength of the residual portion of the second connecting segment 1322c, the strength of the residual portion of the first groove segment 1321, and the strength of the residual portion of the third groove segment 1323, thereby enabling the side wall 13 to preferentially crack at the first-to-open segment 1322a when thermal runaway occurs in the battery cell 10. Moreover, the second groove segment 1322 includes a first connecting segment 1322b, a second connecting segment 1322c, and a first-to-open segment 1322a, the first-to-open segment 1322a and the first groove segment 1321 are connected through the first connecting segment 1322b, and the first-to-open segment 1322a and the third groove segment 1323 are connected through the second connecting segment 1322c, such that the first-to-open segment 1322a is a middle segment of the second groove segment 1322. Thus, after the side wall 13 cracks at the position of the first-to-open segment 1322a, the side wall can quickly crack along the first connecting segment 1322b and the second connecting segment 1322c located at two ends of the first-to-open segment 1322a, thereby shortening the duration for the side wall 13 to crack along the second groove segment 1322 and further enabling the side wall 13 to quickly crack along the first groove segment 1321 and the third groove segment 1323. In the case where the groove length of the second groove segment 1322 is fixed, the arrangement of the first connecting segment 1322b and the second connecting segment 1322c can reduce the length of the first-to-open segment 1322a, such that the side wall 13 can preferentially crack from the first-to-open segment 1322a in a more timely manner when thermal runaway occurs in the battery cell 10, and the initiation position of the side wall 13 is more accurate.

In some embodiments, the minimum residual thickness of the first connecting segment 1322b is equal to the minimum residual thickness of the first groove segment 1321; and/or the minimum residual thickness of the second connecting segment 1322c is equal to the minimum residual thickness of the third groove segment 1323; and/or the minimum residual thickness of the first connecting segment 1322b is equal to the minimum residual thickness of the second connecting segment 1322c; and/or the minimum residual thickness of the first groove segment 1321 is equal to the minimum residual thickness of the third groove segment 1323.

As an example, the minimum residual thickness of the first connecting segment 1322b, the minimum residual thickness of the first groove segment 1321, the minimum residual thickness of the second connecting segment 1322c, and the minimum residual thickness of the third groove segment 1323 are equal. The minimum residual thickness of the first connecting segment 1322b, the minimum residual thickness of the first groove segment 1321, the minimum residual thickness of the second connecting segment 1322c, and the minimum residual thickness of the third groove segment 1323 can all be used as the minimum residual thickness of the other regions of the first groove 132. The maximum groove depths of the first connecting segment 1322b, the first groove segment 1321, the second connecting segment 1322c, and the third groove segment 1323 are all equal. The sum of the minimum residual thickness of the first connecting segment 1322b and the maximum groove depth of the first connecting segment 1322b, the sum of the minimum residual thickness of the first groove segment 1321 and the maximum groove depth of the first groove segment 1321, the sum of the minimum residual thickness of the second connecting segment 1322c and the maximum groove depth of the second connecting segment 1322c, and the sum of the minimum residual thickness of the third groove segment 1323 and the maximum groove depth of the third groove segment 1323 are all equal to the wall thickness of the side wall 13.

When the first groove 132 is formed, the first groove segment 1321, the second groove segment 1322, and the third groove segment 1323 may be first machined at a time according to the groove depth of the first groove segment 1321, and then the second groove segment 1322 is further machined to deepen a local portion of the second groove segment 1322, so as to divide the second groove segment 1322 into the first connecting segment 1322b, the first-to-open segment 1322a, and the second connecting segment 1322c. Finally, the minimum residual thickness of the first connecting segment 1322b, the minimum residual thickness of the first groove segment 1321, the minimum residual thickness of the second connecting segment 1322c, and the minimum residual thickness of the third groove segment 1323 are equal and are all greater than the minimum residual thickness of the first-to-open segment 1322a. This can effectively reduce the difficulty in forming the first groove 132 and improve the forming efficiency of the first groove 132.

In some embodiments, an extension trajectory line of the first groove segment 1321 is located in a first plane U, and the included angle between the center line O of the side wall 13 and the first plane U is α₁, where 30° ≤ α₁ ≤ 90°.

α₁ may take any one point value of 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, and 90°, or a value within a range defined by any two of the point values.

It can be understood that if α₁ = 90°, the first groove segment 1321 extends along the circumferential direction Y of the side wall 13, and the extension trajectory line of the first groove segment 1321 is arc-shaped; if 30° ≤ α₁ < 90°, the extension trajectory line of the first groove segment 1321 is elliptical.

In the embodiments, when 30° ≤ α₁ ≤ 90°, the included angle between the center line O of the side wall 13 and the first plane U is controlled within a reasonable range, thereby reducing the risk of the side wall 13 being torn due to continued cracking along the extension line of the first groove segment 1321 after the side wall 13 cracks along the first groove segment 1321.

In some embodiments, an extension trajectory line of the third groove segment 1323 is located in a second plane V, and the included angle between the center line O of the side wall 13 and the second plane V is α₂, where 30° ≤ α₂ ≤ 90°.

α₂ may take any one point value of 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, and 90°, or a value within a range defined by any two of the point values.

The situation may be that α₂ = α₁, or α₂ < α₁, or α₂ > α₁.

As an example, in the embodiment shown in FIG. 6, the third groove segment 1323 is parallel to the first groove segment 1321, and the second plane V is parallel to the first plane U, where α₂ = α₁ = 90°.

Optionally, 40° ≤ α₁ ≤ 75°, and 40° ≤ α₂ ≤ 75°, such that the predetermined pressure relief zone 134 defined by the first groove segment 1321, the second groove segment 1322, and the third groove segment 1323 can be in an inclined state, so as to reduce the space swept by the predetermined pressure relief zone 134 during the outward flipping process, and reduce the risk of the predetermined pressure relief zone 134 being blocked by other battery cells 10, thereby resulting in a reduced flipping angle of the predetermined pressure relief zone 134.

In the embodiments, when 30° ≤ α₂ ≤ 90°, the included angle between the center line O of the side wall 13 and the second plane V is controlled within a reasonable range, thereby reducing the risk of the side wall 13 being torn due to continued cracking along the extension line of the third groove segment 1323 after the side wall 13 cracks along the third groove segment 1323.

In some embodiments, with continued reference to FIGs. 8 and 9, the groove width of the first groove 132 is W₁, and the groove width of the second groove 133 is W₂, where |W₂ - W₁| ≤ 0.1 mm.

|W₂ - W₁| may take any one point value of 0 mm, 0.01 mm, 0.02 mm, 0.03 mm, 0.04 mm, 0.05 mm, 0.06 mm, 0.07 mm, 0.08 mm, 0.09 mm, and 0.1 mm, or a value within a range defined by any two of the point values.

The situation may be that W₂ > W₁, or W₂ < W₁, or W₂ = W₁.

The groove width of the first groove 132 is the maximum width of a groove opening of the first groove 132 in the width direction of the first groove 132. Taking the first groove 132 being disposed on the outer surface 135 of the side wall 13 as an example, the groove opening of the first groove 132 is located on the outer surface 135 of the side wall 13, and the maximum width of the groove opening of the first groove 132 can be measured on the outer surface 135 of the side wall 13, thereby obtaining the groove width of the first groove 132. The groove width of the second groove 133 is the maximum width of a groove opening of the second groove 133 in the width direction of the second groove 133. Taking the second groove 133 being disposed on the outer surface 135 of the side wall 13 as an example, the groove opening of the second groove 133 is located on the outer surface 135 of the side wall 13, and the maximum width of the groove opening of the second groove 133 can be measured on the outer surface 135 of the side wall 13, thereby obtaining the groove width of the second groove 133.

In the embodiments, when |W₂ - W₁| ≤ 0.1 mm, the difference between the groove width of the second groove 133 and the groove width of the first groove 132 is not excessively large. This helps reduce the difference in the amount of material displaced during machining of the first groove 132 and the second groove 133 and reduce the degree of deformation of the side wall 13, thereby helping improve the roundness of the side wall 13.

In some embodiments, the first groove 132 is disposed on the outer surface 135 of the side wall 13; and/or the second groove 133 is disposed on the outer surface 135 of the side wall 13.

As an example, in the embodiments shown in FIGs. 8 and 9, the second groove 133 and the first groove 132 are both disposed on the outer surface 135 of the side wall 13 and are both formed on the side wall 13 by stamping.

If the first groove 132 is disposed on the outer surface 135 of the side wall 13, the first groove 132 can be machined from the outside of the side wall 13 to reduce the machining difficulty of the first groove 132. If the second groove 133 is disposed on the outer surface 135 of the side wall 13, the second groove 133 can be machined from the outside of the side wall 13 to reduce the machining difficulty of the second groove 133.

In some embodiments, the first groove 132 is a groove extending along a non-closed trajectory; and/or the second groove 133 is a groove extending along a non-closed trajectory.

In an embodiment in which the first groove 132 includes a first groove segment 1321, a second groove segment 1322, and a third groove segment 1323, the first groove segment 1321 may not be in contact with the third groove segment 1323, such that the first groove 132 is a groove extending along a non-closed trajectory; or the first groove segment 1321 may be connected to the third groove segment 1323, such that the first groove segment 1321, the second groove segment 1322, and the third groove segment 1323 are connected end to end, making the second groove 133 a groove extending along a non-closed trajectory.

The first groove 132 is a groove extending along a non-closed trajectory. The first groove 132 of such a structure enables the side wall 13 to exhibit better fatigue resistance, thereby reducing the risk of the side wall 13 cracking prematurely along the first groove 132 during long-term cycling of the battery cell 10. In addition, after the side wall 13 cracks along the first groove, the opened portion of the side wall 13 is not prone to splashing. If the second groove 133 is a groove extending along a non-closed trajectory, the side wall 13 can exhibit better impact resistance, thereby reducing the risk of the side wall 13 cracking along the second groove 133 due to an impact force received near the second groove 133.

In some embodiments, with continued reference to FIG. 4, along the axial direction X of the side wall 13, openings are formed at two opposite ends of the side wall 13. The housing 1 further includes two end covers 12, and the two end covers 12 respectively close the openings at the two ends of the side wall 13.

It can be understood that the side wall 13 is of a hollow structure with openings formed at two opposite ends, and the side wall 13 is the housing body 11 of the housing 1.

The housing body 11 may be formed by stretching a plate. The side wall 13 and the end cover 12 may be connected by welding, crimping, or the like.

In the embodiments, the side wall 13 is of a hollow structure with openings formed at the two opposite ends, and the electrode assembly 2 may be assembled into the side wall 13 through any one of the openings, thereby reducing the assembly difficulty of the battery cell 10 and improving the assembly quality of the battery cell 10. The side wall 13 of such a structure is easier to form, and the length of the side wall 13 (the dimension of the side wall 13 in the axial direction X) can be made larger, which is conducive to increasing the electric capacity of the battery cell 10.

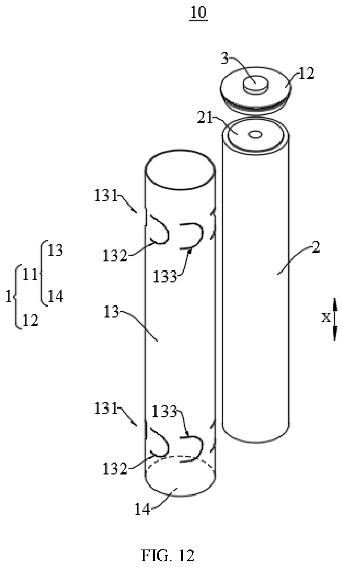

In some embodiments, referring to FIG. 12, FIG. 12 is an exploded view of a battery cell 10 according to some embodiments of the present application. The housing 1 includes a housing body 11 and an end cover 12. The housing body 11 includes a side wall 13 and a bottom wall 14. Along the axial direction X of the side wall 13, one end of the side wall 13 is connected to the bottom wall 14, the other end of the side wall 13 forms an opening, and the end cover 12 closes the opening.

It can be understood that the housing body 11 is of a hollow structure with an opening formed at one end, there is one end cover 12 in the housing 1, and the one end cover 12 correspondingly closes one opening of the housing body 11. The bottom wall 14 is a wall portion, opposite to the end cover 12, of the housing body 11, and the side wall 13 and the bottom wall 14 may be integrally formed. For example, the housing body 11 may be formed by stretching a plate, such that the side wall 13 and the bottom wall 14 are integrally formed. The side wall 13 and the end cover 12 may be connected by welding, crimping, or the like.

As an example, in the embodiment shown in FIG. 12, along the axial direction X of the side wall 13, tabs 21 are formed at two opposite ends of the electrode assembly 2, and the tabs 21 at the two ends of the electrode assembly 2 are a positive electrode tab and a negative electrode tab, respectively. The end cover 12 is provided with an electrode terminal 3, the electrode terminal 3 is electrically connected to the positive electrode tab, and the bottom wall 14 of the housing body 11 is electrically connected to the negative electrode tab.

In the embodiments, the housing body 11 is of a hollow structure with an opening formed at one end. Only one end cover 12 is required to cooperate with the housing body 11 in the battery cell 10, which can simplify the structure of the battery cell 10.

In some embodiments, the material of the side wall 13 includes steel.

The steel may be carbon steel, stainless steel, or the like.

In some embodiments, the material of the side wall 13 includes an aluminum alloy.

In some embodiments, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%.

Such an aluminum alloy has lower hardness and better formability, thereby reducing the machining difficulty of the first groove 132, facilitating the improvement in the machining precision of the first groove 132, and improving the pressure relief consistency of the side wall 13.

In some embodiments, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other individual elements ≤ 0.05%, and all other elements ≤ 0.15%.

The side wall 13 made of such an aluminum alloy has higher hardness and higher strength, and exhibits good damage resistance.

The embodiments of the present application further provide a battery 100. The battery includes the battery cell 10 according to any one of the above embodiments.

The embodiments of the present application further provide an electric device. The electric device includes the battery cell 10 according to any one of the above embodiments, and the battery cell 10 is configured to supply electric energy to the electric device.

Referring to FIGs. 3 to 11, the embodiments of the present application provide a cylindrical battery cell. The cylindrical battery cell includes a housing 1 and an electrode assembly 2. The electrode assembly 2 is accommodated in the housing 1. The housing 1 is cylindrical. The housing 1 includes a housing body 11 and two end covers 12. Openings are formed at two opposite ends of the housing body 11. The housing body 11 forms a side wall 13 of the housing 1, the side wall 13 surrounds an outer side of the electrode assembly 2, and the two end covers 12 respectively close the two openings of the housing body 11. Along an axial direction X of the side wall 13, tabs 21 are formed at both ends of the electrode assembly 2, which are a positive electrode tab and a negative electrode tab, respectively. The two end covers 12 are each provided with an electrode terminal 3. The electrode terminal 3 on one end cover 12 is connected to the positive electrode tab through one current collecting member 4, and the electrode terminal 3 on the other end cover 12 is connected to the negative electrode tab through the other current collecting member 4.

The side wall 13 is provided with two groove groups 131, and the two groove groups 131 are spaced apart from each other along the axial direction X of the side wall 13. Each groove group 131 includes a plurality of grooves. The plurality of grooves are spaced apart and uniformly distributed along a circumferential direction Y of the side wall 13. Among the plurality of grooves, some are first grooves 132, and the others are second grooves 133. A plurality of first grooves 132 and a plurality of second grooves 133 are provided. The first grooves 132 and the second grooves 133 are alternately arranged along the circumferential direction Y of the side wall 13. The sum of the number of the first grooves 132 and the number of the second grooves 133 in the groove group 131 is 6 to 15. The first grooves 132 and the second grooves 133 are both disposed on an outer surface 135 of the side wall 13. The side wall 13 is configured to be capable of cracking along at least a portion of the first groove 132 when the battery cell 10 is subjected to pressure relief.

The first groove 132 is provided with a first-to-open segment 1322a that preferentially cracks. The first groove 132 includes a first groove segment 1321, a second groove segment 1322, and a third groove segment 1323. The second groove segment 1322 connects the first groove segment 1321 and the third groove segment 1323. The first groove segment 1321, the second groove segment 1322, and the third groove segment 1323 are sequentially connected. The first groove segment 1321 and the third groove segment 1323 are disposed opposite to each other. The second groove segment 1322 includes a first connecting segment 1322b, a first-to-open segment 1322a, and a second connecting segment 1322c. The first connecting segment 1322b connects the first-to-open segment 1322a and the first groove segment 1321, and the second connecting segment 1322c connects the first-to-open segment 1322a and the third groove segment 1323. The minimum residual thickness of the first groove segment 1321, the minimum residual thickness of the first connecting segment 1322b, the minimum residual thickness of the second connecting segment 1322c, and the minimum residual thickness of the third groove segment 1323 are equal and are all greater than the minimum residual thickness of the first-to-open segment 1322a. The minimum residual thickness of the second groove 133 is greater than the minimum residual thickness of the first-to-open segment 1322a. On an extension path of the first groove 132, the groove length of the first groove segment 1321 is equal to the groove length of the third groove segment 1323, and the groove length of the first connecting segment 1322b is equal to the groove length of the second connecting segment 1322c.

The residual thickness of the first-to-open segment 1322a is T₁, and the wall thickness of the side wall 13 is D, where 0.04 ≤ T₁/D ≤ 0.9. On an extension path of the second groove segment 1322, the groove length of the first-to-open segment 1322a is L, where 0.2 mm ≤ L ≤ 10 mm. An extension trajectory line of the first groove segment 1321 is located in a first plane U, and the included angle between a center line O of the side wall 13 and the first plane U is α₁, where 30° ≤ α₁ ≤ 90°; an extension trajectory line of the third groove segment 1323 is located in a second plane V, and the included angle between the center line O of the side wall 13 and the second plane V is α₂, where 30° ≤ α₂ ≤ 90°. The second plane V is parallel to the first plane U.

In such a battery cell 10, the first groove 132 is a true pressure relief groove, and the second groove 133 is a dummy pressure relief groove. The arrangement of the second groove 133 on the side wall 13 enables the side wall 13 to release stress at the position where the second groove 133 is formed, thereby alleviating deformation of the side wall 13 caused by stress release of the side wall 13 at the first groove 132. This can effectively improve the roundness of the side wall 13 and improve the assembly quality of the battery cell 10, thereby prolonging the service life of the battery cell 10. When thermal runaway occurs in the battery cell 10, the side wall 13 preferentially cracks at the position of the first-to-open segment 1322a of the second groove segment 1322, and the resulting crack can propagate along the first groove segment 1321 and the third groove segment 1323. After the side wall 13 cracks at the position of the first-to-open segment 1322a, the side wall can quickly crack along the first groove segment 1321 and the third groove segment 1323, thereby shortening the duration for the side wall 13 to crack along the first groove 132. This allows for timely pressure relief and reduces the risk of fire or explosion during thermal runaway of the battery cell 10, thereby effectively improving the reliability of the battery cell 10. In addition, controlling the included angle between the center line O of the side wall 13 and the first plane U within a range of 30° to 90° can reduce the risk of the side wall 13 being torn due to continued cracking along the extension line of the first groove segment 1321 after the side wall 13 cracks along the first groove segment 1321. Controlling the included angle between the center line O of the side wall 13 and the second plane V within the range of 30° to 90° can reduce the risk of the side wall 13 being torn due to continued cracking along the extension line of the third groove segment 1323 after the side wall 13 cracks along the third groove segment 1323.

It should be noted that in the absence of conflicts, the embodiments and features of the embodiments in the present application may be combined with each other.

The above embodiments are only intended to illustrate the technical solutions of the present application and are not intended to limit the present application. For those skilled in the art, various modifications and changes can be made to the present application. Any modification, equivalent substitution, improvement, and the like made within the spirit and principle of the present application shall all fall within the protection scope of the present application.

## Claims

1. A battery cell, comprising:
an electrode assembly; and
a housing, having a cylindrical shape, wherein the housing accommodates the electrode assembly, and the housing comprises a side wall disposed around the electrode assembly;
the side wall is provided with a groove group, the groove group comprises a plurality of grooves spaced apart from each other along a circumferential direction of the side wall, the plurality of grooves comprise at least one first groove, and the side wall is configured to be capable of cracking along at least a portion of the first groove when the battery cell is subjected to pressure relief;
wherein the plurality of grooves further comprise at least one second groove, and a minimum residual thickness of the second groove is greater than a minimum residual thickness of the first groove.

2. The battery cell according to claim 1, wherein along the circumferential direction of the side wall, the first grooves and the second grooves are alternately arranged.

3. The battery cell according to claim 1 or 2, wherein a plurality of first grooves and a plurality of second grooves are provided in the groove group.

4. The battery cell according to any one of claims 1 to 3, wherein a sum of a number of the first grooves and a number of the second grooves in the groove group is N, wherein 2 ≤ N ≤ 20.

5. The battery cell according to claim 4, wherein 6 ≤ N ≤ 15.

6. The battery cell according to any one of claims 1 to 5, wherein a number of the first grooves is equal to a number of the second grooves in the groove group.

7. The battery cell according to any one of claims 1 to 6, wherein along the circumferential direction of the side wall, the plurality of grooves in the groove group are uniformly distributed on the side wall.

8. The battery cell according to any one of claims 1 to 7, wherein the side wall is provided with a plurality of groove groups, and the plurality of groove groups are spaced apart from each other along an axial direction of the side wall.

9. The battery cell according to any one of claims 1 to 8, wherein the first groove is provided with a first-to-open segment that preferentially cracks, the first groove comprises a first groove segment, a second groove segment, and a third groove segment, the second groove segment connects the first groove segment and the third groove segment, and at least a portion of the second groove segment forms the first-to-open segment.

10. The battery cell according to claim 9, wherein the first groove segment, the second groove segment, and the third groove segment are sequentially connected to form the continuously arranged first groove, and on an extension path of the first groove, a midpoint of the first groove is located in the first-to-open segment.

11. The battery cell according to claim 9 or 10, wherein on an extension path of the second groove segment, a midpoint of the second groove segment is located in the first-to-open segment.

12. The battery cell according to any one of claims 9 to 11, wherein a minimum residual thickness of the first-to-open segment is T₁, a minimum residual thickness of other regions of the first groove is T₂, and the minimum residual thickness of the second groove is T₃, wherein T₁ < T₂ and T₁ < T₃.

13. The battery cell according to claim 12, wherein |T₃ - T₂| ≤ 0.1 mm.

14. The battery cell according to any one of claims 9 to 13, wherein a minimum residual thickness of the first-to-open segment is T₁, and a wall thickness of the side wall is D, wherein 0.04 ≤ T₁/D ≤ 0.9.

15. The battery cell according to claim 14, wherein 0.1 ≤ T₁/D ≤ 0.5.

16. The battery cell according to any one of claims 9 to 15, wherein on an extension path of the second groove segment, a groove length of the first-to-open segment is L, wherein 0.2 mm ≤ L ≤ 10 mm.

17. The battery cell according to claim 16, wherein 1 mm ≤ L ≤ 6 mm.

18. The battery cell according to any one of claims 9 to 17, wherein the first groove segment, the second groove segment, and the third groove segment are sequentially connected to form the continuously arranged first groove, and the first groove segment and the third groove segment are disposed opposite to each other.

19. The battery cell according to claim 18, wherein the first groove segment and the third groove segment are both smoothly connected to the second groove segment.

20. The battery cell according to claim 18 or 19, wherein the second groove segment comprises a first connecting segment, a second connecting segment, and the first-to-open segment, the first connecting segment connects the first-to-open segment and the first groove segment, and the second connecting segment connects the first-to-open segment and the third groove segment;
wherein a minimum residual thickness of the first connecting segment, a minimum residual thickness of the second connecting segment, a minimum residual thickness of the first groove segment, and a minimum residual thickness of the third groove segment are all greater than a minimum residual thickness of the first-to-open segment.

21. The battery cell according to claim 20, wherein the minimum residual thickness of the first connecting segment is equal to the minimum residual thickness of the first groove segment; and/or
the minimum residual thickness of the second connecting segment is equal to the minimum residual thickness of the third groove segment; and/or
the minimum residual thickness of the first connecting segment is equal to the minimum residual thickness of the second connecting segment; and/or
the minimum residual thickness of the first groove segment is equal to the minimum residual thickness of the third groove segment.

22. The battery cell according to any one of claims 9 to 21, wherein an extension trajectory line of the first groove segment is located in a first plane, and an included angle between a center line of the side wall and the first plane is α₁, wherein 30° ≤ α₁ ≤ 90°.

23. The battery cell according to claim 22, wherein an extension trajectory line of the third groove segment is located in a second plane, and an included angle between the center line of the side wall and the second plane is α₂, wherein 30° ≤ α₂ ≤ 90°.

24. The battery cell according to any one of claims 1 to 23, wherein a groove width of the first groove is W₁, and a groove width of the second groove is W₂, wherein |W₂ - W₁| ≤ 0.1 mm.

25. The battery cell according to any one of claims 1 to 24, wherein the first groove is disposed on an outer surface of the side wall; and/or the second groove is disposed on an outer surface of the side wall.

26. The battery cell according to any one of claims 1 to 25, wherein the first groove is a groove extending along a non-closed trajectory; and/or the second groove is a groove extending along a non-closed trajectory.

27. The battery cell according to any one of claims 1 to 26, wherein along an axial direction of the side wall, openings are formed at two opposite ends of the side wall;
the housing further comprises two end covers, and the two end covers respectively close the openings at the two ends of the side wall.

28. The battery cell according to any one of claims 1 to 26, wherein the housing comprises:
a housing body, comprising the side wall and a bottom wall, wherein along an axial direction of the side wall, one end of the side wall is connected to the bottom wall, and an opening is formed at the other end of the side wall; and
an end cover, closing the opening.

29. A battery, comprising the battery cell according to any one of claims 1 to 28.

30. An electric device, comprising the battery cell according to any one of claims 1 to 28, wherein the battery cell is configured to supply electric energy to the electric device.
